# EUROPEAN PATENT APPLICATION

(11) **EP 4 654 080 A1**
(43) Date of publication of application: **26.11.2025**
(21) Application number: 24177052.8
(22) Date of filing: 21.05.2024
(51) Int. Cl.: G06N 3/0455, G06Q 10/0631, G06Q 10/0639, G06N 5/02, G06N 3/0464, G06N 3/0475, G06N 3/088, G06Q 50/04

(54) **METHOD AND SYSTEM OF GENERATING AN ENGINEERING PROJECT BASED ON COMPLIANCE REQUIREMENTS**

(71) Applicant: Siemens Aktiengesellschaft, 80333 München (DE)
(72) Inventor: NAYAK, Prajwal, 560062 Bangalore, Karnataka (IN); ANTONY, Elvis, 560102 Bangalore (IN); N, Madhusudanan, 560036 Bengaluru, Karnataka (IN); CHENECHARRY, Vivek, 560083 Bengaluru, Karnataka (IN)
(74) Representative: Isarpatent

(57) **Abstract**

The present invention provides a method and system for automatic generation of an engineering project based on at least one compliance requirement. The method comprises receiving at least one compliance requirement for a first engineering project. The method further comprises generating a first set of knowledge morphs and a second set of knowledge morphs by implementation of a knowledge morph generation procedure on the at least one compliance requirement and on a second engineering project. The method further comprises generating the first engineering project by implementation of an engineering project generation procedure on the first set and the second set of knowledge morphs.

## Description

The present invention relates to a field of engineering of computer assisted engineering, and more particularly relates to a method and system for generation of an engineering project based on one or more compliance requirements.

An engineering project comprises a plurality of engineering project artifacts such as engineering programs, binary codes, control philosophies, and piping and instrumentation diagrams. The plurality of engineering project artifacts comprises information associated with a plurality of industrial devices which function together to achieve one or more objectives in an industrial plant. Examples of the industrial plant includes but is not limited to a power plant, a manufacturing plant, and a water treatment plant. Examples of the plurality of industrial devices includes but is not limited to a programmable logic controller, one or more field devices, or any other automation devices. Examples of the one or more field devices includes but is not limited to, motors, rotors, mixers, furnaces, heaters, refrigerators, control valves, pumps, and actuators. Each of the plurality of engineering project artifacts are used to configure the plurality of industrial devices to achieve a specific objective in the industrial plant. For example, the plurality of industrial devices may be controlled by execution of a first engineering project artifact such as an engineering program in a computing platform.

The computing platform has a list of available resource parameters which is indicative of a processing speed, a processing bandwidth, available storage space, available memory, a computer architecture, a software version, and a list of compatible programming languages. Thus, in order for the computing platform to execute the engineering program, the engineering program must adhere to one or more compliance requirements in alignment with the list of available resource parameters for the computing platform.

Thus, in a case where the engineering program does not adhere to the one or more compliance requirements, a coder has to manually modify the engineering program such that the modified engineering program aligns with the one or more compliance requirements. Furthermore, in a case where a new engineering program has to be coded for the computing platform, the coder has to manually code the new engineering program such that the new engineering program adheres to the one or more compliance requirements.

To manually code a new engineering program, the coder follows the following sequential steps:
1. The coder generates a high level requirement document for code generation, depending on a business user case.
2. The coder further refines the high level requirement to obtain a more detailed requirement document
3. The coder generates a high level design of the engineering program
4. The coder generates a detailed design which is more detailed than the high level design
5. The coder programs one or more components of the engineering program are programmed as per the generated detailed design
6. The coder performs tests are to check if the engineering program performs as desired.
7. The coder then performs debugging and ensures that all issues are resolved.

The coder has to wait the implementation of the engineering program in the industrial plant to physically check if the engineering program can be further optimized or is working as expected. Furthermore, the coder has to spend significant effort on performing these optimizations or alterations on the engineering program. Additionally, when dealing with customer-specific standards for automation, the coder has to apply manual effort and know-how to ensure these standards are followed correctly in the engineering program.

In a case where the coder has to work on green field projects, the coder must navigate through the aforementioned time limitations. On the other hand, with brown field projects, where existing systems need enhancement to meet new requirements, the coder has to deal with potential lack of well-documented knowledge. Despite the challenges, the coder has to make necessary changes and implement tests to ensure the system performs as per expectations. Ultimately, in all these scenarios, the coder may face expensive processes that are not guaranteed to achieve high-quality outcomes.

In light of above, there exists a need for an efficient method and system for automatic generation of an engineering project which is compliant with one or more compliance requirements of at least one computing platform.

The object of the invention is achieved by a computer implemented method of automatically generating an engineering project which is compliant with a specific compliance requirement. An automation module is configured to automatically generate the engineering project artifacts based on the specific compliance requirements. The engineering project comprises one or more engineering project artifacts such as an engineering program, control philosophies, binary code and other documents necessary for implementation of an engineering project in an industrial plant.

Examples of the industrial plant includes but is not limited to a power plant, a manufacturing plant, and a water treatment plant. The industrial plant comprises a plurality of industrial devices such as programmable logic controllers, one or more field devices, or any other automation devices. Examples of the one or more field devices includes but is not limited to, motors, rotors, mixers, furnaces, heaters, refrigerators, control valves, pumps, and actuators.

The engineering project, as referred herein, comprises information associated with the plurality of industrial devices. The plurality of industrial devices are configured to implement a plurality of industrial processes in the industrial plant. Examples of the plurality of industrial devices includes a programmable logic controller, one or more field devices, or any other automation devices. Examples of the one or more field devices includes but is not limited to, motors, rotors, mixers, furnaces, heaters, refrigerators, control valves, pumps, and actuators. Examples of the plurality of industrial processes include, but is not limited to a heating process, a cooling process and a melting process. The engineering project comprises a plurality of engineering project artifacts such as a plurality of engineering programs, a plurality of piping and instrumentation diagrams and a plurality of control philosophies which comprise configuration information associated with the plurality of industrial devices.

At least one compliance requirement for the engineering project is indicative of a textual description of at least one key performance indicator, which the engineering project should achieve in the industrial plant. The textual description may be described in a natural language or any other high level symbolic notation. In one example, the engineering project may be designed by human engineers such that implementation of the engineering project in the industrial plant causes the industrial plant to achieve the at least one key performance indicator. Examples of the at least one key performance indicator of the engineering project includes but is not limited to a water consumption, an energy consumption, a production speed, an energy efficiency, and a carbon footprint of the industrial plant in which the engineering project is deployed. The at least one key performance indicator further comprises one or more parameters associated with a product manufactured/generated in the industrial plant. Examples of the one or more parameters includes but is not limited to a size, a shape, a length, a purity level, and a resistance level of the product manufactured in the industrial plant.

In a preferred embodiment, the method comprises receiving, by a processing unit, a request to generate a first engineering project. The first engineering project comprises a plurality of engineering project artifacts such as at least one engineering program, at least one piping and instrumentation diagram, and at least one control philosophy, and also at least one cost estimate for deploying the first engineering project in an industrial plant. In other words, the first engineering project is a plurality of documents and source code which is necessary for configuring the plurality of industrial devices to achieve a specific objective while adhering to a specific set of key performance indicators.

The received request further comprises at least one compliance requirement for the first engineering project. The at least one compliance requirement is received via an input device such as a human machine interface (HMI). In one example, the at least one compliance requirement is received as a textual description of the specific objective and the specific set of key performance indicators. In another example, the at least one compliance requirement is as a numerical value which indicates the specific set of key performance indicators associated with the first engineering project. For example, the at least one compliance requirement may comprise numerical value of a length or a width of an article manufactured in the industrial plant by virtue of the first engineering project. In another example, the at least one compliance requirement may comprise a numerical value of a purity level of the article. In yet another example, the at least one compliance requirement comprises a textual description of the specific set of key performance indicators of the industrial plant in which the first engineering project will be deployed. In other words, the at least one compliance requirement comprises the textual description of the specific set of key performance indicators which the first engineering project should be designed to achieve. In one example, the received request comprises information associated with a second engineering project. The information associated with the second engineering project is a project which is already deployed in the industrial plant. The second engineering project comprises at least one engineering program, at least one piping and instrumentation diagram, at least one wiring diagram, and a control philosophy associated with the second engineering project. In other words, the second engineering project comprises a plurality of documents associated with an existing engineering project which has been deployed in the industrial plant. The second engineering project does not meet the at least one compliance requirement associated with the first engineering project.

In the preferred embodiment, the method comprises generating, by the processing unit, a first knowledge graph based on the at least one compliance requirement. The method further comprises generating a second knowledge graph based on the second engineering project.

It is noted that the at least one compliance requirement is a textual description of the specific set of key performance indicators and the specific objective which should be achieved by the plurality of industrial devices, when the plurality of industrial devices are configured based on the first engineering project. The textual description comprises words, units and numbers. To generate the first knowledge graph, the processing unit is configured to apply a natural language processing algorithm and a named entity recognition technique on the textual description in the at least one compliance requirement. The natural language processing algorithm uses a library such as SpaCY or NLTK to identify a plurality of entities and a plurality of key performance indicators in the textual description. The processing unit is further configured to apply a dependency parsing algorithm to the textual description to determine a plurality of interdependencies between the plurality of identified entities and the plurality of key performance indicators. Examples of the plurality of entities include one or more devices described in the textual description such as motors, programmable logic controllers and valves. The plurality of key performance indicators include but is not limited to a speed, an efficiency, and a cost of deploying the first engineering project in the industrial plant. The plurality of interdependencies are indicative of one or more Key performance indicators associated with each of the plurality of entities. For example, a first entity, such as a motor, has a first Key performance indicator such as a speed. The second entity, such as a programmable logic controller, has a second key performance indicators such as a processing speed.

The processing unit is further configured to arrange the identified plurality of entities and the identified plurality of key performance indicators, into a user-defined knowledge graph schema. The user-defined knowledge graph schema is a schema comprising a plurality of rules for arranging information associated with the identified plurality of entities and the identified plurality of key performance indicators into a plurality of nodes. Furthermore, the plurality of rules comprises rules for generating a plurality of links between the plurality of nodes based on the determined plurality of interrelationships between the identified plurality of entities and the identified plurality of key performance indicators. Each node of the plurality of nodes comprises information associated with at least one of an entity of the plurality of entities and a key performance indicator of the plurality of key performance indicators. The first knowledge graph comprises the plurality of nodes and the plurality of links between the plurality of nodes.

Similarly, the processing unit is configured to generate a second knowledge graph based on the second engineering project. It is noted that the second engineering project comprises a plurality of engineering project artifacts such as engineering programs, piping and instrumentation diagrams, and control philosophies.

To generate the second knowledge graph, the processing unit is configured to apply a natural language processing algorithm and a named entity recognition technique on the second engineering project. The natural language processing algorithm uses a library such as SpaCY or NLTK to identify a plurality of engineering objects and a plurality of key performance indicators in the plurality of engineering project artifacts of the second engineering project. Examples of the plurality of engineering objects include but is not limited to references to a plurality of industrial devices, a plurality of software objects, and a plurality of connection schemas. Examples of the plurality of industrial devices comprises, but is not limited to devices used in the industrial plant such as a programmable logic controller, a motor, a human machine interface, valves, pumps, etc. Examples of the plurality of software objects include but is not limited to a code objects in the plurality of engineering programs such as a loop statement, an assignment statement, classes, objects, arrays, and other code objects. The plurality of connection schemas include information associated with interconnections between objects in the piping and instrumentation diagrams, and function calls in the plurality of engineering programs.

In one example, the processing unit is configured to tokenize the plurality of engineering project artifacts of the second engineering project to generate a plurality of tokens. Each token of the plurality of tokens comprises at least one constituent data item of the second engineering program. Thus each token of the plurality of tokens is at least one of word, a code snippet, a variable, a function, a conditional statement, a programming block, a class, a node, and a graphical object.

Furthermore, the processing unit is configured to apply a parsing algorithm on the plurality of tokens to derive a plurality of interdependencies between the plurality of tokens. In one example, the parsing algorithm is a dependency parsing algorithm which is configured to analyze a syntactic structure of interdependencies between one or more tokens of the plurality of tokens. The parsing algorithm is configured to identify a plurality of interdependencies between two or more tokens of the plurality of tokens based on the application of the parsing algorithm on the plurality of engineering project artifacts. The plurality of interdependencies comprise a plurality of grammatical, syntactic, and semantic relationships between two or more tokens of the plurality of tokens. In one example, the processing unit is configured to filter the plurality of tokens with one or more named entity recognition (NER) algorithms to identify mentions of each of a plurality of constituent data items in the second engineering project.

The processing unit is configured to analyze the identified mentions of the plurality of tokens. The processing unit is further configured to assign a plurality of semantic roles to the identified mentions of the plurality of tokens. The plurality of semantic roles are assigned by application of a semantic role labelling algorithm on the identified mentions of the plurality of tokens. The semantic roles of each token of the plurality of tokens is indicative of a relationship of each token with other tokens of the plurality of tokens. Examples of the semantic role labelling algorithms include, but is not limited to AllenNLP Algorithm or PropBank project algorithm. In one example, the semantic roles of each token of the plurality of tokens are assigned based on a plurality of user defined rules. The plurality of user defined rules comprises rules which are received from one or more users.

The processing unit is configured to generate a plurality of dependency trees based on the determined plurality of interdependencies between two or more tokens of the plurality of tokens. Each dependency tree of the plurality of dependency trees is indicative of a plurality of interdependencies between a specific token of the plurality of tokens and other tokens extracted from the second engineering project.

The second knowledge graph is generated based on the plurality of dependency trees. In one example, the processing unit is configured to concatenate the plurality of dependency trees to generate the second knowledge graph based on a set of rules. The set of rules is received by the processing unit, from the user via an input device. In another example, the processing unit is configured to combine the plurality of dependency trees by application of a mathematical operation such as a union operation or an intersection operation on the plurality of dependency trees. The processing unit is configured to merge the plurality of dependency trees based on an analysis of the assigned plurality of semantic roles.

The second knowledge graph comprises a plurality of nodes. Each node of the plurality of nodes comprises information associated with a specific token of the plurality of tokens of the second engineering project. Thus, the name graph comprises information associated with the plurality of interdependencies between the plurality of tokens extracted from the at least one engineering program. Thus, the generated name graph comprises information associated with a structure of the at least one engineering program.

In the preferred embodiment, the method further comprises generating a first set of knowledge morphs and a second set of knowledge morphs by implementation of a knowledge morph generation procedure on the first knowledge graph and the second knowledge graph. It is noted that the first knowledge graph is generated from the at least one compliance requirement and the second knowledge graph is generated from the second engineering project.

Each knowledge morph of the first set of knowledge morph and the second set of knowledge morph are ontological representations of relationships between one or more compliance requirements of the industrial plant, and the first and the second engineering projects. In one example, each knowledge morph is comprises at least one segment of the first knowledge graph or the second knowledge graph. The automation module is configured to convert the at least one compliance requirement into the first set of knowledge morphs, which can be used by a generative system such as a generative artificial intelligence system such as a Generative pre-trained transformer to generate the first engineering project which complies with the at least one compliance requirement. The at least one compliance requirement may be written in a high level language or natural language or in high level notations. Advantageously, the automation module is enabled to generate the first engineering project from the at least one compliance requirement.

The first set and the second set of knowledge morphs are designed to be transformed or morphed from one specialized view or form to another, thereby catering to various solution domains, and are part of an innovative solution aimed at system optimization and efficiency.

Advantageously, the automation module significantly reduces time and effort required to realize a concept by facilitating the automatic generation of the plurality of engineering project artifacts such as engineering program, documents, and executables. The plurality of engineering project artifacts, when compiled together, forms the first engineering project.

The at least one compliance requirement may be written in a high-level language, natural language, or in high-level notations. The first set of knowledge morphs and the second set of knowledge morphs serve as a bridge between design and implementation, allowing for expression of complete requirements at a high-level using notations that can be directly executed on machines. To achieve this seamless integration, a transformer autoencoder model based on a deep representation of code is utilized to convert the at least one compliance requirements into the first set of knowledge morphs. Advantageously, the first set of knowledge morphs captures symbol-level information and a clear mapping between the plurality of engineering project artifacts such as PLC code and notational representations of the at least one compliance requirement.

Advantageously, the automation module is enabled to generate the first engineering project from the at least one compliance requirement using the first set of knowledge Morphs and the second set of knowledge morphs. Thus, the first set of Knowledge Morphs and the second set of knowledge morphs is not limited to new or "green field" projects but can also be applied to existing or "brown field" projects. The automation module is enabled to generate the first set of knowledge morphs using available artifacts like binaries and code. Furthermore, the first set of Knowledge Morphs and the second set of knowledge morphs are compared to assess deviations from between the second engineering project and the at least one compliance requirement. To facilitate this comparison, a difference parameter between the first set of knowledge morph and the second set of knowledge morphs, called the knowledge morph metric is used as a comparison score between multiple Knowledge Morphs.

Each knowledge morph of the first set of and the second set of knowledge morphs comprises a specialized view of a base representation of a central knowledge morph. The central knowledge morph comprises the ontological representation of the entire industrial plant and furthermore, possible variations of configurations of the plurality of industrial devices of the industrial plant. Each knowledge morph encompasses a series of variations of the central knowledge morph. Each variation is characterized by a distinct set of configuration parameters meticulously adjusted to realize a targeted set of key performance indicators. Consequently, each knowledge morph includes a compilation of variant versions of the first engineering project, with each variant designed to meet a specific subset of a plurality of key performance indicators. In other words, each Knowledge Morphs is a dynamic artifact introduced as part of an innovative solution to system optimization and efficiency, serving as ontological representations that bridge the gap between design and implementation. Advantageously, a generative pre-trained transformer may be applied on the first set of knowledge morphs and the second set of knowledge morphs to facilitate automatic generation of a plurality of compliant engineering projects. Advantageously, the at least one compliance requirements may be expressed as high-level expression of requirements. Furthermore, the first set of knowledge morphs and the second set of knowledge morphs support comparison and assessment across different phases and types of engineering projects.

In one example, each Knowledge Morph of the first set of knowledge morphs and the second set of knowledge morphs is an ontological representation that captures an engineering program, of an engineering project, from a functional and flow perspective. For example, each knowledge morph can relate to a correct syntax of a programming language and aggregations of statements that are logically part of each programming block of an engineering program. Each Knowledge Morph is tailored to meet specific objectives such as understanding a coordinated mission of all programming block for a given project, including all hardware components. The first set of knowledge morphs and the second set of knowledge morphs comprises at least one of an engineering knowledge morph, a tuned engineering knowledge morph, a quality engineering knowledge morph, and an engineering system knowledge morph.

The engineering knowledge morph serves as a programmatic representation of the engineering project. The engineering knowledge morph comprises information which focusses on engineering aspects and interactions within the engineering project. The engineering knowledge morph comprises engineering blocks and other program objects. Thus, the engineering knowledge morph encapsulates details associated with interaction with the engineering objects, providing insights into a structure and a functionality of the engineering project.

The Tuned Engineering Knowledge Morph comprises a list of variants of the central Knowledge Morph. Each variant of the list of variants optimized for a specific industrial domain. The tuned engineering knowledge morph tunes the engineering project based the industrial domain in which the engineering project is deployed. For example, both in a pharmaceutical domain and an iron ore extraction domain, conveyor belts are used in production lines. However, one or more compliance requirements the conveyor belts in each domain differ significantly due to varying operational conditions. Thus, the tuned engineering knowledge graph has a first variant which is tuned for the pharmaceutical domain and a second variant which is tuned for iron ore extraction domain.

The quality engineering knowledge morph comprises a list of variants of the central knowledge morph. Each variant of the list of variants is associated with a specific quality standard associated with the engineering project. The quality engineering knowledge morph helps to identify areas of improvement and ensures that the engineering project meets one or more required quality standards.

The engineering system knowledge morph comprises a list of variants of the central knowledge morphs such that each variant comprises information associated with a specified connection parameter between the plurality of industrial devices within the engineering project.

To implement the knowledge morph generation procedure, the processing unit is configured to execute a first set of steps. In a first step of the first set of steps, the processing unit is configured apply a flattening algorithm on the generated first and second knowledge graphs. Examples of the flattening algorithms include but is not limited to a tree traversal algorithm, a graph partitioning algorithm, a semantic flattening algorithm, a dimensionality reduction algorithm, and a graph compression algorithm. The flattening algorithm is configured to generate a flattened first knowledge graph and a flattened second knowledge graph based on the application of the flattening algorithm on the first and the second knowledge graphs. The flattened first knowledge graph and the flattened second knowledge graph is a simplified and condensed representation of the first knowledge graph and the second knowledge graph.

In a second step of the first set of steps, the processing unit is configured to apply a transformer autoencoder model on the flattened first knowledge graph and the flattened second knowledge graph. The transformer autoencoder model is configured to generate the first set of knowledge morphs and the second set of knowledge morphs from the flattened first knowledge graph and the flattened second knowledge graphs respectively. The first set of knowledge morphs comprises ontological representations of one or more engineering project artifacts of one or more engineering projects. The one or more engineering project artifact adhere to the at least one compliance requirement. The second set of knowledge morphs comprises ontological representations of the second engineering project. The first set of knowledge morphs and the second set of knowledge morphs comprises at least one of the engineering knowledge morph, the tuned engineering knowledge morph, the quality engineering knowledge morph, and the engineering system knowledge morph.

In the third step of the first set of steps, the processing unit is configured to generate the first set of knowledge morphs and the second set of knowledge morphs based on application of the transformer autoencoder model on the flattened first knowledge graph and the flattened second knowledge graph.

The transformer autoencoder model comprises an encoder model and a decoder model. The encoder model is a neural network with a first set of neurons and a first set of neural weights. The decoder model is a neural network with a second set of neurons and a second set of neural weights.

In a preferred embodiment, the method comprises training, by the processing unit, a plurality of transformer autoencoder models to generate a set of knowledge morphs from one or more knowledge graphs. At least one transformer autoencoder model of the plurality of transformer autoencoder mode is configured to generate the set of knowledge morphs from a knowledge graph associated with the at least one compliance requirement. At least one transformer autoencoder model of the plurality of transformer autoencoder mode is configured to generate the set of knowledge morphs from a knowledge graph associated with one or more engineering projects.

Each transformer autoencoder model of the plurality of transformer autoencoder models is an artificial intelligence model such as a convolutional neural network or a deep neural network.

Each transformer autoencoder model of the plurality of transformer autoencoder model has a specific transformation objective. The specific transformation objective of a transformer autoencoder model is indicative of an input specification and an output specification of the transformer autoencoder model. For example, at least one transformer autoencoder model of the plurality of transformer autoencoder models is configured to convert a knowledge graph associated with the at least one compliance requirement to a set of knowledge morphs. The set of knowledge morphs comprises a series of knowledge graphs which comprises information associated with a plurality of methods to achieve one or more key performance indicators referenced in the at least one compliance requirement. Furthermore, at least one transformer autoencoder model of the plurality of transformer autoencoder model is configured to convert a knowledge graph associated with an engineering project to a set of knowledge morphs.

In a preferred embodiment, each transformer autoencoder model of the plurality of transformer autoencoder models comprises an encoder model and a decoder model. The encoder model of each transformer autoencoder model comprises a first set of neurons and a first set of neural weights. The encoder model is at least one of a Graph Convolutional Networks, GraphSAGE (Graph Sample and Aggregated Embedding), or a Graph Isomorphism Network (GIN). The decoder model of each transformer autoencoder model comprises a second set of neurons and a second set of neural weights. Examples of the decoder model includes but is not limited to a Feedforward Decoder model, a Convolutional Decoder model, a Graph Decoder model, or a Recurrent Generative Model based decoders.

The processing unit is configured to train the encoder model for each transformer autoencoder model of the plurality of transformer autoencoder models by iterative execution of a first set of steps. In one example, each execution of the first set of steps trains an encoder model of a specific transformer autoencoder model of the plurality of transformer autoencoder models.

To train an encoder model of the specific transformer autoencoder model of the plurality of transformer autoencoder models, the processing unit executes a second set of steps. In the first step of the second set of steps, the processing unit is configured to receive a plurality of input data items. The plurality of input data items comprises a plurality of portions of a knowledge graph associated with at least one of the at least one compliance requirement or at least one engineering project.

In a second step of the second set of steps, the processing unit is configured to apply the encoder model on the plurality of input data items. The encoder model is configured to encode the plurality of input data items to generate a plurality of encoded data items. The plurality of encoded data items is at least one of a graph embedding, a word embedding, state embeddings, or sequence-to-sequence embedding.

In a third step of the second set of steps, the processing unit is configured to apply the decoder model on the plurality of encoded data items to generate a plurality of reconstructed data items. The decoder model is configured to reconstruct the plurality of input data items from the plurality of encoded data items. However, the decoder model is unable to generate a faithful reconstruction of the plurality of input data items as there is a possibility of reconstruction loss. Thus, the generated plurality of reconstructed data items is different from the plurality of input data items.

In a fourth step of the second set of steps, the processing unit is configured to compare the plurality of input data items with the plurality of reconstructed data items. In one example, the plurality of input data items is compared with the plurality of reconstructed data items by application of a of a comparison algorithm such as cosine similarity algorithms, Levenshtein distance, Jaccard similarity, or Sounde algorithms on the plurality of reconstructed data items and the plurality of input data items. The processing unit is further configured to determine a reconstruction loss parameter based on the comparison. In one example, the reconstruction loss parameter is indicative of a plurality of differences between the plurality of input data items and the plurality of reconstructed data items. In other words, the reconstruction loss parameter is indicative of a reconstruction loss associated with the transformer autoencoder model.

In a fifth step of the second set of steps, the processing unit is configured to apply an optimizing algorithm on the encoder model to optimize the first set of neural weights of the first set of neurons of the encoder model. In one example, the optimization algorithm is a Stochastic Gradient Descent optimizer algorithm which is configured to optimize the first set of weights with an optimization goal of minimizing the reconstruction loss parameter of the transformer autoencoder model. In other words, the processing unit is configured to optimize the first set of neural weights of the encoder model by application of the optimization algorithm on the first set of neural weights based on the determined reconstruction loss parameter. Thus the processing unit is configured to iterate the second set of steps until the first set of weights are optimized such that the reconstruction loss parameter is minimized. Thus, the processing unit is configured to train the encoder model of each transformer autoencoder model by iterative execution of the second set of steps.

Similarly, a decoder model of each transformer autoencoder model is trained by the processing unit by iteratively executing a third set of steps. To train a decoder model of a specific transformer autoencoder model of the plurality of transformer autoencoder models, the processing unit executes the first step of the third set of steps. In the first step of the third set of steps, the processing unit is configured to receive an input data item. The input data item is a portion of a knowledge graph associated with at least one of the at least one compliance requirement or at least one engineering project.

In the first step, the processing unit is further configured to receive an expected data item from a user or from a database. The expected data item comprises a set of knowledge morphs associated with at least one of the at least one compliance requirement or the at least one engineering project. In other words, the transformer autoencoder model is ideally expected to convert the input data item to the expected data item. In one example, the user generates the expected data item manually and the processing unit receives the expected data item from the user. In one example, the transformer autoencoder model is configured to generate the set of knowledge morphs based on the at least one compliance requirement or the at least one engineering project.

In one example, the processing unit is configured to receive from the user, a plurality of set of training data, in which each set of training data is associated with a specific transformation objective of a plurality of transformation objectives. The plurality of training dataset comprises an input dataset comprising a plurality of compliance requirements and a plurality of engineering objects. The plurality of training dataset further comprises an output dataset comprising a plurality of knowledge morphs.

The processing unit is further to iteratively execute the second set of steps and the third set of steps on each transformer autoencoder model of the plurality of transformer autoencoder models based on the received plurality of sets of training data. For example, one or more sets of the plurality of sets of training data is configured to train one or more transformer autoencoder models to transform knowledge graphs of one or more compliance requirements into a set of knowledge morphs. Similarly, one or more sets of the plurality of sets of training data is configured to train one or more transformer autoencoder models to transform knowledge graphs of one or more engineering projects into a set of knowledge morphs.

In the preferred embodiment, the method further comprises generating, by the processing unit, the first engineering project by implementation of an engineering project generation procedure on the first set and the second set of knowledge morphs. Advantageously, the first engineering project is compliant with the at least one compliance requirement.

The processing unit is configured to implement a fourth set of steps to generate the first engineering project from the first set of knowledge morphs and the second set of knowledge morphs. In a first set of the fourth set of steps, the processing unit is configured to receive a plurality of knowledge templates from a database server. Each knowledge template of the plurality of knowledge templates comprises a portion of an engineering project which complies with a specific compliance requirement of a plurality of compliance requirement. For example, a knowledge template comprises information associated with an engineering program which complies with a set of compliance requirements of the plurality of compliance requirements. For example, the set of compliance requirements is a list of compliance requirements which is indicative of a specific industrial domain in which the engineering project is implemented, a list of industrial devices connected within the engineering project, a specified cost of implementation of the engineering project, and a predefined efficiency level of execution of the engineering program. In such a case, the first knowledge template comprises an engineering program which executes with the predefined efficiency level to control the list of industrial devices connected within the engineering project. Furthermore, the engineering program can be run in a Programmable logical controller whose costs are aligned with the specified cost of implementation of the engineering project. Furthermore, the engineering program is coded such as to efficiently achieve one or more objectives in the specific industrial domain.

Each knowledge template is linked to a specific set of compliance requirements of the set of compliance requirements. The plurality of knowledge templates are generated by manual coders or may be extracted from a plurality of engineering projects by an engineering system.

In the preferred embodiment, the method further comprises comparing the first set of knowledge morphs and the second set of knowledge morphs with each knowledge template of the plurality of knowledge templates. In one example, the processing unit is configured to compare the first set of knowledge morphs with each knowledge template of the plurality of knowledge templates to determine a first set of knowledge templates which match with the at least one compliance requirement associated with the first set of knowledge morphs. The processing unit is further configured to compare the second set of knowledge morphs with each knowledge template of the first set of knowledge morphs. The processing unit is further configured to determine a second set of knowledge templates from the first set of knowledge templates. The determined second set of knowledge templates comprise information about a set of industrial devices which are represented in the second set of knowledge morphs. In other words, the processing unit is configured to identify those knowledge templates which comprises information about a list of devices in the second engineering project.

In the preferred embodiment, the method further comprises concatenating, by the processing unit, the determined set of knowledge templates by implementation of a concatenation procedure on the determined set of knowledge templates. The concatenation of the determined set of knowledge templates is performed by application of a set of user defined rules which may be received from a user. The set of user defined rules comprises rules of concatenating the determined set of knowledge templates to generate the first engineering project. The processing unit is further configured to generate the first engineering project based on the concatenated set of knowledge templates.

In the preferred embodiment, the method further comprises determining, by the processing unit, a difference parameter based on a plurality of differences between the first set of knowledge morphs and the second set of knowledge morphs. In one example, the difference parameter is a knowledge morph metric parameter. In one example, the difference parameter is determined by application of a comparator algorithm between the first set of knowledge morphs and the second set of knowledge morphs. Since the first set of knowledge morphs comprises information about the at least one compliance requirement and the second set of knowledge morphs comprises information about the second engineering project, the difference parameter is indicative of a degree of non-compliance of the second engineering project with the at least one compliance requirement. The method further comprises displaying the difference parameter to a user. In the preferred embodiment, the method further comprises displaying, by the processing unit, the generated first engineering project to a user.

The object of the present invention is also achieved by an engineering system for automatic configuration of engineering objects. The engineering system comprises one or more processor(s) and a memory coupled to the processor. The memory comprises an automation module stored in the form of machine-readable instructions executable by the processor. The automation module is configured for performing the method as described above.

The object of the present invention is also achieved by an industrial environment. The industrial environment comprising an engineering system, a industrial plant comprising one or more physical components and one or more client devices communicatively coupled to the engineering system and the industrial plant. The engineering system is configured to perform the above described method steps.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a block diagram of an industrial environment capable of automatic generation of an engineering project based on at least one compliance requirement, according to an embodiment of the present invention;
- FIG 2: is a block diagram of an engineering system, such as those shown in FIG. 1, in which an embodiment of the present invention can be implemented;
- FIG 3: is a block diagram of an automation module, such as those shown in FIG 2, in which an embodiment of the present invention can be implemented;
- FIG 4: is a process flowchart illustrating an exemplary method of automatically generating an engineering project based on at least one compliance requirement, according to an embodiment of the present invention; and
- FIG 5: is a schematic representation of a process of automatic generation of an engineering project by use of knowledge morphs, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

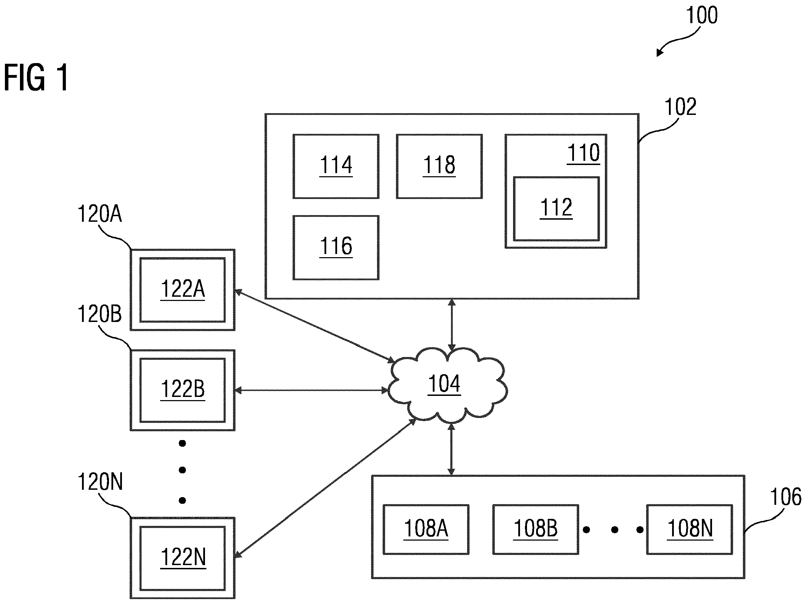

FIG 1 is a block diagram of an industrial environment 100 capable of automatic generation of an engineering project for an industrial plant 106 based on at least one compliance requirement, according to an embodiment of the present invention. In FIG 1, the industrial environment 100 includes an engineering system 102, the industrial plant 106 and one or more client devices 120A-N. As used herein, "industrial environment" refers to a processing environment comprising configurable computing physical and logical resources, for example, networks, servers, storage, applications, services, etc., and data distributed over a platform, such as cloud computing platform. The industrial environment 100 provides on-demand network access to a shared pool of the configurable computing physical and logical resources. The engineering system 102 is communicatively connected to a industrial plant via the network 104 (such as Local Area Network (LAN), Wide Area Network (WAN), Wi-Fi, Internet, any short range or wide range communication). The engineering system 102 is also connected to the one or more client devices 120A-N via the network 104.

The industrial plant 106 comprises a set of engineering project artifacts 108A-N. Examples of the set of engineering project artifacts 108A-N may include, for example, a programmable logic controller, one or more field devices, or any other automation devices. Examples of the one or more field devices includes but is not limited to, motors, rotors, mixers, furnaces, heaters, refrigerators, control valves, pumps, and actuators. Examples of the industrial plant 106 includes but is not limited to a power plant, a manufacturing plant, and a water treatment plant.

The set of engineering project artifacts 108A-N are operated by execution of a plurality of programming blocks in a controller device of the industrial plant 106. The controller device is configured to execute the plurality of programming blocks and to control the set of engineering project artifacts 108A-N to achieve a specific objective in the industrial plant 106. In one example, the controller device is a programmable logic controller or a cloud based computing platform.

Each engineering object of the set of engineering project artifacts 108A-N has a plurality of properties which are described in a plurality of documents such as connection schemas, bill of materials, and product manuals. The plurality of properties includes but is not limited to information associated with compatibility of each engineering objects with other engineering objects of the set of engineering project artifacts 108A-N, temperature rating, pressure rating, a function in the indsutrial plant 106, configuration settings associated with the set of engineering project artifacts 108A-N and residual life of the set of engineering project artifacts 108A-N. The plurality of documents comprises process related documents like process operation description document, process flowchart, and process control philosophy, piping and instrumentation diagrams, and non-process documents such as bill of materials, brochures, statement of procedure documents, and product manuals. Furthermore, the plurality of documents comprises information associated with a plurality of dependencies of each property of the plurality of properties with each other. The plurality of documents comprises paper based documents as well as electronic documents.

In one example, the plurality of documents comprises information associated with a plurality of key performance indicators of the industrial plant 106. The plurality of key performance indicators are measured by a plurality of field sensors from the set of engineering project artifacts 108A-N.

The engineering system 102 is connected to the set of engineering project artifacts 108AN in the industrial plant 106 via the network 104. The set of engineering project artifacts 108A-N may be connected to each other or several other components (not shown in FIG 1) via physical connections. The physical connections may be through wiring between the set of engineering project artifacts 108A-N. Alternatively, the set of engineering project artifacts 108A-N is connected via non-physical connections (such as Internet of Things (IOT)) and 5G networks. Although, FIG 1 illustrates the engineering system 102 connected to one industrial plant 106, one skilled in the art can envision that the engineering system 102 can be connected to several industrial plants located at different geographical locations via the network 104.

The one or more client devices 120A-N may be a desktop computer, laptop computer, tablet, smart phone and the like. Each of the one or more client devices 120A-N is provided with an engineering tool 122A-N for generating and/or editing the plurality of engineering projects. For example, the one or more client devices 120A-N can access the engineering system 102 for automatically generating one or more engineering projects. The one or more client devices 120A-N can access cloud applications (such as providing performance visualization of the set of engineering project artifacts 108A-N via a web browser). Throughout the specification, the terms "client device" and "user device" are used interchangeably.

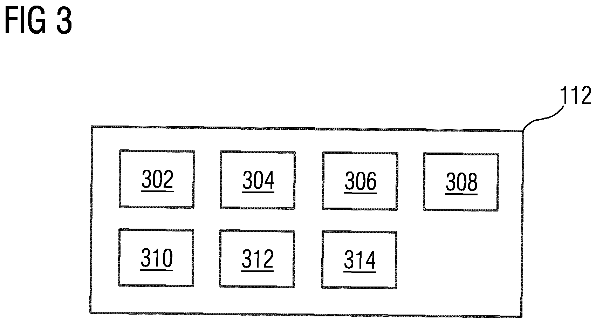

The engineering system 102 may be a standalone server deployed at a control station or may be a remote server on a cloud computing platform. In a preferred embodiment, the engineering system 102 may be a cloud-based engineering system. The engineering system 102 is capable of delivering applications (such as cloud applications) for managing the industrial plant 106 comprising the set of engineering project artifacts 108A-N. The engineering system 102 may comprise a platform 110 (such as a cloud computing platform), an automation module 112, a server 114 including hardware resources and an operating system (OS), a network interface 116 and a database 118. The network interface 116 enables communication between the engineering system 102, the industrial plant, and the one or more client device(s) 120A-N. The interface (such as cloud interface)(not shown in FIG 1) may allow the engineers at the one or more client device(s) 120A-N to access the one or more engineering projects stored at the engineering system 102 and perform one or more actions on the one or more engineering projects as same instance. The server 114 may include one or more servers on which the OS is installed. The servers 114 may comprise one or more processors, one or more storage devices, such as, memory units, for storing data and machine-readable instructions for example, applications and application programming interfaces (APIs), and other peripherals required for providing computing (such as cloud computing) functionality. The platform 110 enables functionalities such as data reception, data processing, data rendering, data communication, etc. using the hardware resources and the OS of the servers 114 and delivers the aforementioned services using the application programming interfaces deployed therein. The platform 110 may comprise a combination of dedicated hardware and software built on top of the hardware and the OS. The platform 110 may further comprise an automation module 112 configured for generating ethe one or more engineering projects. The automation module 112 further comprises a knowledge repository 126 comprising at least one name graph. Details of the automation module 112 is explained in FIG. 3.

The plurality of engineering projects comprises engineering projects associated with a plurality of domains. Examples of the plurality of domains includes, but is not limited to a chemical domain, a mechanical domain, a manufacturing domain, and an energy domain. Furthermore, each engineering project of the plurality of engineering projects comprises information associated with a plurality of variants of the plurality of engineering objects. Each variant of the plurality of variants differ from each other in voltage rating, power rating, year of manufacturing, vibration resistance, and water resistance.

Each engineering project of the plurality of engineering projects comprises at least a plurality of programming blocks, a piping and instrumentation diagram and a control philosophy which comprise configuration information associated with the plurality of engineering objects. The configuration information comprises information indicative of a manner in which the plurality of engineering objects can be connected and operated to achieve a specific objective in the industrial plant 106. The specific objective is associated with a plurality of key performance indicators of the industrial plant 106. Example of the plurality of key performance indicators include but is not limited to an energy consumption of the industrial plant 106, a water usage of the industrial plant 106, a turnover time of the industrial plant 106 and a operation cost of the industrial plant 106. Each engineering project of the plurality of engineering project is configured to cause the plurality of engineering object to function and achieve a specific combination of key performance indicators of the plurality of key performance indicators. In one example, each engineering project of the plurality of engineering projects comprises a plurality of documents which contain information about the manner in which the plurality of engineering objects are connected and operated to achieve the specific objective in the industrial plant 106.

The plurality of documents comprises information about a plurality of properties of the plurality of engineering objects. Examples of the plurality of documents include but is not limited to a connection schema, a bill of materials, and a product manual associated with the plurality of engineering objects. The plurality of properties includes but is not limited to information associated with compatibility of each engineering objects with other engineering objects of the plurality of engineering objects. Furthermore, the plurality of properties comprises a temperature rating, a pressure rating, and a function of each engineering object in the industrial plant 106. The plurality of properties furtehr comprises configuration settings associated with the plurality of engineering objects 108A-N and residual life of the plurality of engineering objects 108A-N. The plurality of documents comprises process related documents like process operation description document, process flowchart, and process control philosophy, piping and instrumentation diagrams, and non-process documents such as bill of materials, brochures, statement of procedure documents, and product manuals. Furthermore, the plurality of documents comprises information associated with a plurality of dependencies of each property of the plurality of properties with each other. The plurality of documents comprises paper based documents as well as electronic documents.

Furthermore, each engineering project of the plurality of engineering projects comprises information associated with a plurality of variants of the plurality of engineering objects. Each variant of the plurality of variants differ from each other in voltage rating, power rating, year of manufacturing, vibration resistance, and water resistance. Furthermore, one or more values of the plurality of key performance indicators of the industrial plant 106 are depedent on a variant of the plurality of engineering objects used in the industrial plant 106.

It is noted that each engineering project of the plurality of engineering projects comprises at least one piping and instrumentation diagram and the plurality of programming blocks. The piping and instrumentation diagram comprises information associated with interconnection between the plurality of engineering objects in each engineering project of the plurality of engineering projects.

The plurality of engineering projects further comprises a plurality of programming blocks. The plurality of programming blocks comprises programming code which is executed by a controller device in the industrial plant 106 to control operations of the plurality of engineering objects. In other words, the plurality of engineering objects are connected in the industrial plant 106 based on the piping and instrumentation diagram. The controller device, such as a rogrammable logic controller, is configured to execute the plurality of programming blocks to control the plurality of engineering objects to achieve a specific objective in the industrial plant 106.

Thus, in other words, each engineering project of the plurality of engineering projects comprises configuration information to configure the plurality of engineering objects to operate and achieve a specific value for each of the plurality of key performance indicators of the industrial plant. Information associated with the plurality of key performance indicators are stored as a textual document in each of the plurality of engineering projects.

In one example, the plurality of engineering projects comprise information about the plurality of programming blocks associated with the plurality of engineering objects. The plurality of engineering projects further comprises information associated with an interdependency between the plurality of programming blocks and the plurality of key performance indicators of the industrial plant 106. In one example, each programming block of the plurality of programming block is linked to a specific value of at least one key performance indicator of the plurality of key performance indicators of the industrial plant.

The database 118 stores the information relating to the industrial plant 106 and the one or more client device(s) 120A-N. The database 118 is, for example, a structured query language (SQL) data store or a not only SQL (NoSQL) data store. In an exemplary embodiment, the database 118 may be configured as cloud-based database implemented in the industrial environment 100, where computing resources are delivered as a service over the platform 110. The database 118, according to another embodiment of the present invention, is a location on a file system directly accessible by the automation module 112. The database 118 is configured to store engineering project files, engineering programs, object behavior model, parameter values associated with the set of engineering project artifacts 108A-N, test results, simulation results, status messages, one or more simulation instances, graphical programs, program logics, program logic patterns, product manuals of the set of engineering project artifacts 108A-N and engineering object properties, one or more engineering object blocks, relationship information between the engineering objects, requirements, program update messages and the like.

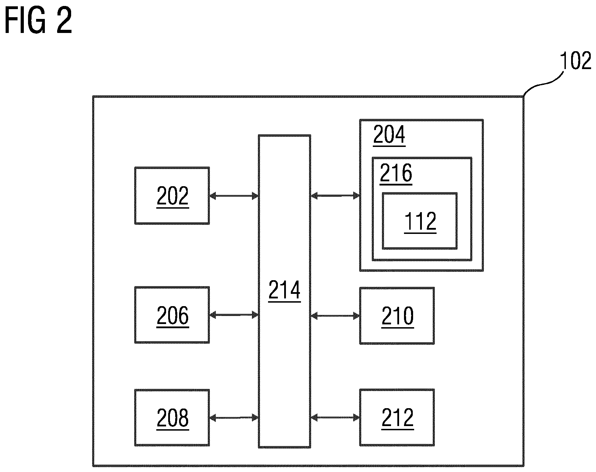

FIG 2 is a block diagram of an engineering system 102, such as those shown in FIG 1, in which an embodiment of the present invention can be implemented. In FIG 2, the engineering system 102 includes a processing unit 202, an accessible memory 204, a storage unit 206, a communication interface 208, an input-output unit 210, a network interface 212 and a bus 214.

The processing unit 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processing unit 202 may also include embedded controllers, such as generic or programmable logic devices or arrays, application specific integrated circuits, single-chip computers, and the like.

The memory 204 may be non-transitory volatile memory and non-volatile memory. The memory 204 may be coupled for communication with the processing unit 202, such as being a computer-readable storage medium. The processing unit 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes the automation module 112 stored in the form of machine-readable instructions on any of the above-mentioned storage media and may be in communication with and executed by the processor(s) 202.

The automation module 112 is configured to automatically generate an engineering project based on a specific compliance requirement. The engineering project comprises a plurality of engineering project artifacts 108A-N such as an engineering program, control philosophies, binary code and other documents necessary for implementation of an engineering project in the industrial plant 106.

The engineering project, as referred herein, comprises information associated with the plurality of industrial devices. The plurality of industrial devices are configured to implement a plurality of industrial processes in the industrial plant 106. Examples of the plurality of industrial devices includes a programmable logic controller, one or more field devices, or any other automation devices. Examples of the one or more field devices includes but is not limited to, motors, rotors, mixers, furnaces, heaters, refrigerators, control valves, pumps, and actuators. Examples of the plurality of industrial processes include, but is not limited to a heating process, a cooling process and a melting process. The engineering project comprises the plurality of engineering project artifacts 108A-N such as a plurality of engineering programs, a plurality of piping and instrumentation diagrams and a plurality of control philosophies which comprise configuration information associated with the plurality of industrial devices.

At least one compliance requirement for the engineering project is indicative of a textual description of at least one key performance indicator, which the engineering project should achieve in the industrial plant 106. In one example, the engineering project may be designed by human engineers such that implementation of the engineering project in the industrial plant 106 causes the industrial plant 106 to achieve the at least one key performance indicator. Examples of the at least one key performance indicator of the engineering project includes but is not limited to a water consumption, an energy consumption, a production speed, an energy efficiency, and a carbon footprint of an industrial plant in which the engineering project is deployed. The at least one key performance indicator further comprises one or more parameters associated with a product manufactured/generated in the industrial plant. Examples of the one or more parameters includes but is not limited to a size, a shape, a length, a purity level, and a resistance level of the product manufactured in the industrial plant.

When executed by the processing unit 202, the automation module 112 causes the processing unit 202 to receive a request to generate a first engineering project. The first engineering project comprises a plurality of engineering project artifacts 108A-N such as at least one engineering program, at least one piping and instrumentation diagram, and at least one control philosophy, and also at least one cost estimate for deploying the first engineering project in the industrial plant 106. In other words, the first engineering project is a plurality of documents and source code which is necessary for configuring the plurality of industrial devices to achieve a specific objective while adhering to a specific set of key performance indicators.

The received request further comprises at least one compliance requirement for the first engineering project. The at least one compliance requirement is received via an input device such as a human machine interface (HMI). In one example, the at least one compliance requirement is received as a textual description of the specific objective and the specific set of key performance indicators. In another example, the at least one compliance requirement is as a numerical value which indicates the specific set of key performance indicators associated with the first engineering project. For example, the at least one compliance requirement may comprise numerical value of a length or a width of an article manufactured in the industrial plant by virtue of the first engineering project. In another example, the at least one compliance requirement may comprise a numerical value of a purity level of the article.

In yet another example, the at least one compliance requirement comprises a textual description of the specific set of key performance indicators of the industrial plant in which the first engineering project will be deployed. In other words, the at least one compliance requirement comprises the textual description of the specific set of key performance indicators which the first engineering project should be designed to achieve. In one example, the received request comprises information associated with a second engineering project. The information associated with the second engineering project is a project which is already deployed in the industrial plant 106. The second engineering project comprises at least one engineering program, at least one piping and instrumentation diagram, at least one wiring diagram, and a control philosophy associated with the second engineering project. In other words, the second engineering project comprises a plurality of documents associated with an existing engineering project which has been deployed in the industrial plant 106. The second engineering project does not meet the at least one compliance requirement associated with the first engineering project.

The automation module is configured to generate a first knowledge graph based on the at least one compliance requirement. The automation module causes the processing unit to generate generating a second knowledge graph based on the second engineering project.

It is noted that the at least one compliance requirement is a textual description of the specific set of key performance indicators and the specific objective which should be achieved by the plurality of industrial devices, when the plurality of industrial devices are configured based on the first engineering project. The textual description comprises words, units and numbers. To generate the first knowledge graph, the processing unit 202 is configured to apply a natural language processing algorithm and a named entity recognition technique on the textual description in the at least one compliance requirement. The natural language processing algorithm uses a library such as SpaCY or NLTK to identify a plurality of entities and a plurality of key performance indicators in the textual description. The processing unit 202 is further configured to apply a dependency parsing algorithm to the textual description to determine a plurality of interdependencies between the plurality of identified entities and the plurality of key performance indicators. Examples of the plurality of entities include one or more devices described in the textual description such as motors, programmable logic controllers and valves. The plurality of key performance indicators include but is not limited to a speed, an efficiency, and a cost of deploying the first engineering project in the industrial plant 106. The plurality of interdependencies are indicative of one or more Key performance indicators associated with each of the plurality of entities. For example, a first entity, such as a motor, has a first Key performance indicator such as a speed. The second entity, such as a programmable logic controller, has a second key performance indicators such as a processing speed.

The processing unit 202 is further configured to arrange the identified plurality of entities and the identified plurality of key performance indicators, into a user-defined knowledge graph schema. The user-defined knowledge graph schema is received from a user. The user-defined knowledge graph schema is a schema comprising a plurality of rules for arranging information associated with the identified plurality of entities and the identified plurality of key performance indicators into a plurality of nodes. Furthermore, the plurality of rules comprises rules for generating a plurality of links between the plurality of nodes based on the determined plurality of interrelationships between the identified plurality of entities and the identified plurality of key performance indicators. Each node of the plurality of nodes comprises information associated with at least one of an entity of the plurality of entities and a key performance indicator of the plurality of key performance indicators. The first knowledge graph comprises the plurality of nodes and the plurality of links between the plurality of nodes.

Similarly, the processing unit is configured to generate a second knowledge graph based on the second engineering project. It is noted that the second engineering project comprises a plurality of engineering project artifacts such as engineering programs, piping and instrumentation diagrams, and control philosophies.

To generate the second knowledge graph, the processing unit 202 is configured to apply a natural language processing algorithm and a named entity recognition technique on the second engineering project. The natural language processing algorithm uses a library such as SpaCY or NLTK to identify a plurality of engineering objects and a plurality of key performance indicators in the plurality of engineering project artifacts of the second engineering project. Examples of the plurality of engineering objects include but is not limited to references to a plurality of industrial devices, a plurality of software objects, and a plurality of connection schemas. Examples of the plurality of industrial devices comprises, but is not limited to devices used in the industrial plant such as a programmable logic controller, a motor, a human machine interface, valves, pumps, etc. Examples of the plurality of software objects include but is not limited to a code objects in the plurality of engineering programs such as a loop statement, an assignment statement, classes, objects, arrays, and other code objects. The plurality of connection schemes include information associated with interconnections between objects in the piping and instrumentation diagrams, and function calls in the plurality of engineering programs.

In one example, the processing unit 202 is configured to tokenize the set of engineering documents of the second engineering project to generate a plurality of tokens. Each token of the plurality of tokens comprises at least one constituent data item of the second engineering program. Thus each token of the plurality of tokens is at least one of word, a code snippet, a variable, a function, a conditional statement, a programming block, a class, a node, and a graphical object.

Furthermore, the processing unit 202 is configured to apply a parsing algorithm on the plurality of tokens to derive a plurality of interdependencies between the plurality of tokens. In one example, the parsing algorithm is a dependency parsing algorithm which is configured to analyze a syntactic structure of interdependencies between one or more tokens of the plurality of tokens. The parsing algorithm is configured to identify a plurality of interdependencies between two or more tokens of the plurality of tokens based on the application of the parsing algorithm on the at least one engineering program. The plurality of interdependencies comprise a plurality of grammatical, syntactic, and semantic relationships between two or more tokens of the plurality of tokens. In one example, the processing unit is configured to filter the plurality of tokens with one or more named entity recognition (NER) algorithms to identify mentions of each of a plurality of constituent data items in the second engineering project.

The processing unit 202 is configured to analyze the identified mentions of the plurality of tokens. The processing unit 202 is further configured to assign a plurality of semantic roles to the identified mentions of the plurality of tokens. The plurality of semantic roles are assigned by application of a semantic role labelling algorithm on the identified mentions of the plurality of tokens. The semantic roles of each token of the plurality of tokens is indicative of a relationship of each token with other tokens of the plurality of tokens. Examples of the semantic role labelling algorithms include, but is not limited to AllenNLP Algorithm or PropBank project algorithm. In one example, the semantic roles of each token of the plurality of tokens are assigned based on a plurality of user defined rules. The plurality of user defined rules comprises rules which are received from one or more users.

The processing unit is configured to generate a plurality of dependency trees based on the determined plurality of interdependencies between two or more tokens of the plurality of tokens. Each dependency tree of the plurality of dependency trees is indicative of a plurality of interdependencies between a specific token of the plurality of tokens and other tokens extracted from the second engineering project.

The second knowledge graph is generated based on the plurality of dependency trees. In one example, the processing unit 202 is configured to concatenate the plurality of dependency trees to generate the second knowledge graph based on a set of rules. The set of rules is received by the processing unit 202, from the user via an input device. In another example, the processing unit 202 is configured to combine the plurality of dependency trees by application of a mathematical operation such as a union operation or an intersection operation on the plurality of dependency trees. The processing unit 202 is configured to merge the plurality of dependency trees based on an analysis of the assigned plurality of semantic roles.

The second knowledge graph comprises a plurality of nodes. Each node of the plurality of nodes comprises information associated with a specific token of the plurality of tokens of the second engineering project. Thus, the name graph comprises information associated with the plurality of interdependencies between the plurality of tokens extracted from the at least one engineering program. Thus, the generated name graph comprises information associated with a structure of the at least one engineering program.

The processing unit 202 is further configured to generate a first set of knowledge morphs and a second set of knowledge morphs by implementation of a knowledge morph generation procedure on the first knowledge graph and the second knowledge graph. It is noted that the first knowledge graph is generated from the at least one compliance requirement and the second knowledge graph is generated from the second engineering project.

Each knowledge morph of the first set of knowledge morph and the second set of knowledge morph are ontological representations of the industrial plant 106 and the first and the second engineering projects. The automation module 112 is configured to convert the at least one compliance requirement into the first set of knowledge morphs, which can be used by a generative system such as a generative artificial intelligence system such as a Generative pre-trained transformer to generate the first engineering project which complies with the at least one compliance requirement. The at least one compliance requirement may be written in a high level language or natural language or in high level notations. Advantageously, the automation module is enabled to generate the first engineering project from the at least one compliance requirement.

The first set and the second set of knowledge morphs are designed to be transformed or morphed from one specialized view or form to another, thereby catering to various solution domains, and are part of an innovative solution aimed at system optimization and efficiency.

Advantageously, the automation module 112 significantly reduces time and effort required to realize a concept by facilitating the automatic generation of engineering project artifacts such as engineering program, documents, and executables.

The at least one compliance requirement may be written in a high-level language, natural language, or in high-level notations. The first set of knowledge morphs and the second set of knowledge morphs serve as a bridge between design and implementation, allowing for expression of complete requirements at a high level using notations that can be directly executed on machines. To achieve this seamless integration, a transformer autoencoder model based on a deep representation of code is utilized to convert the at least one compliance requirements into the first set of knowledge morphs, capturing symbol-level information and enabling a clear mapping between PLC code and notational representations of the at least one compliance requirement.

Advantageously, the automation module 112 is enabled to generate the first engineering project from the at least one compliance requirement using the first set of knowledge Morphs and the second set of knowledge morphs. Thus, a novel concept of Knowledge Morphs is not limited to new or "green field" projects but can also be applied to existing or "brown field" projects. The automation module 112 is enabled to generate morphs using available artifacts like binaries and code. Furthermore, Knowledge Morphs can be used to represent existing systems as knowledge graphs and derive comparisons to assess deviations from the original requirements. To facilitate this comparison, a novel mechanism called the Knowledge Morph Metric (KMM) is introduced, providing a comparison score between multiple Knowledge Morphs.

Each knowledge morph of the first set of and the second set of knowledge morphs provide a specialized view of a base representation of a central knowledge morph. The central knowledge morph comprises the ontological representation of the industrial plant 106 and possible variations of configurations of the plurality of industrial devices of the industrial plant 106. Each knowledge morph encompasses a series of variations of the central knowledge morph. Each variation is characterized by a distinct set of configuration parameters meticulously adjusted to realize a targeted set of key performance indicators. Consequently, each knowledge morph includes a compilation of variant versions of the industrial plant 106, with each variant designed to meet a specific subset of a plurality of key performance indicators. In other words, each Knowledge Morphs is a dynamic artifact introduced as part of an innovative solution to system optimization and efficiency, serving as ontological representations that bridge the gap between design and implementation. Advantageously, each knowledge morph facilitate automatic generation of compliant engineering projects, enable high-level expression of requirements, and support comparison and assessment across different phases and types of engineering projects.

For example, each Knowledge Morph is a representation that captures an engineering program, of an engineering project, from a functional and flow perspective. For example, each knowledge morph can relate to a correct syntax of a programming language and aggregations of statements that are logically part of each programming block of an engineering program. Each Knowledge Morph is tailored to meet specific objectives such as understanding a coordinated mission of all programming block for a given project, including all hardware components. The first set of knowledge morphs and the second set of knowledge morphs comprises at least one of an engineering knowledge morph, a tuned engineering knowledge morph, a quality engineering knowledge morph, and an engineering system knowledge morph.

The engineering knowledge morph serves as a programmatic representation of an engineering project. The engineering knowledge morph comprises information which focusses on engineering aspects and interactions within the engineering project. The engineering knowledge morph comprises engineering blocks and other program objects. Thus, the engineering knowledge morph encapsulates details associated with interaction with the engineering objects, providing insights into a structure and a functionality of the engineering project.

The Tuned Engineering Knowledge Morph comprises a list of variants of the central Knowledge Morph. Each variant of the list of variants optimized for a specific industrial domain. The tuned engineering knowledge morph tunes the engineering project based the industrial domain in which the engineering project is deployed. For example, both in a pharmaceutical domain and an iron ore extraction domain, conveyor belts are used in production lines. However, one or more compliance requirements the conveyor belts in each domain differ significantly due to varying operational conditions. Thus, the tuned engineering knowledge graph has a first variant which is tuned for the pharmaceutical domain and a second variant which is tuned for iron ore extraction domain.

The quality engineering knowledge morph comprises a list of variants of the central knowledge morph. Each variant of the list of variants is associated with a specific quality standard associated with the engineering project. The quality engineering knowledge morph helps to identify areas of improvement and ensures that the engineering project meets one or more required quality standards.

The engineering system knowledge morph comprises a list of variants of the central knowledge morphs such that each variant comprises information associated with a specified connection parameter between the plurality of industrial devices within the engineering project.

To implement the knowledge morph generation procedure, the processing unit 202 is configured to execute a first set of steps. In a first step of the first set of steps, the processing unit 202 is configured apply a flattening algorithm on the generated first and second knowledge graphs. Examples of the flattening algorithms include but is not limited to a tree traversal algorithm, a graph partitioning algorithm, a semantic flattening algorithm, a dimensionality reduction algorithm, and a graph compression algorithm. The flattening algorithm is configured to generate a flattened first knowledge graph and a flattened second knowledge graph based on the application of the flattening algorithm on the first and the second knowledge graphs. The flattened first knowledge graph and the flattened second knowledge graph is a simplified and condensed representation of the first knowledge graph and the second knowledge graph.

In a second step of the first set of steps, the processing unit 202 is configured to apply a transformer autoencoder model on the flattened first knowledge graph and the flattened second knowledge graph. The transformer autoencoder model is configured to generate a first set of knowledge morphs and a second set of knowledge morphs from the flattened first knowledge graph and the flattened second knowledge graphs respectively. The first set of knowledge morphs comprises ontological representations of one or more engineering project artifacts of one or more engineering projects. The one or more engineering project artifact adhere to the at least one compliance requirement. The second set of knowledge morphs comprises ontological representations of the second engineering project. The first set of knowledge morphs and the second set of knowledge morphs comprises at least one of the engineering knowledge morph, the tuned engineering knowledge morph, the quality engineering knowledge morph, and the engineering system knowledge morph.

In the third step of the first set of steps, the processing unit is configured to generate the first set of knowledge morphs and the second set of knowledge morphs based on application of the transformer autoencoder model on the flattened first knowledge graph and the flattened second knowledge graph. Each knowledge morph of the first set and the second set of knowledge morphs are ontological representations of relationships between one or more compliance requirements of the industrial plant, and the first and the second engineering projects. Each knowledge morph comprises one or more segments of the first knowledge graph and the second knowledge graph.

The transformer autoencoder model comprises an encoder model and a decoder model. The encoder model is a neural network with a first set of neurons and a first set of neural weights. The decoder model is a neural network with a second set of neurons and a second set of neural weights.

In a preferred embodiment, the method comprises training, by the processing unit, a plurality of transformer autoencoder models to generate a set of knowledge morphs from one or more knowledge graphs. At least one transformer autoencoder model of the plurality of transformer autoencoder mode is configured to generate the set of knowledge morphs from a knowledge graph associated with the at least one compliance requirement.

At least one transformer autoencoder model of the plurality of transformer autoencoder mode is configured to generate the set of knowledge morphs from a knowledge graph associated with one or more engineering projects.

Each transformer autoencoder model of the plurality of transformer autoencoder models is an artificial intelligence model such as a convolutional neural network or a deep neural network.

Each transformer autoencoder model of the plurality of transformer autoencoder model has a specific transformation objective. The specific transformation objective of a transformer autoencoder model is indicative of an input specification and an output specification of the transformer autoencoder model. For example, at least one transformer autoencoder model of the plurality of transformer autoencoder models is configured to convert a knowledge graph associated with the at least one compliance requirement to a set of knowledge morphs. The set of knowledge morphs comprises a series of knowledge graphs which comprises information associated with a plurality of methods to achieve one or more key performance indicators referenced in the at least one compliance requirement. Furthermore, at least one transformer autoencoder model of the plurality of transformer autoencoder model is configured to convert a knowledge graph associated with an engineering project to a set of knowledge morphs.

Each transformer autoencoder model of the plurality of transformer autoencoder models comprises an encoder model and a decoder model. The encoder model of each transformer autoencoder model comprises a first set of neurons and a first set of neural weights. The encoder model is at least one of a Graph Convolutional Networks, GraphSAGE (Graph Sample and Aggregated Embedding), or a Graph Isomorphism Network (GIN). The decoder model of each transformer autoencoder model comprises a second set of neurons and a second set of neural weights. Examples of the decoder model includes but is not limited to a Feedforward Decoder model, a Convolutional Decoder model, a Graph Decoder model, or a Recurrent Generative Model based decoders.

The processing unit 202 is configured to train the encoder model for each transformer autoencoder model of the plurality of transformer autoencoder models by iterative execution of a second set of steps. In one example, each execution of the second set of steps trains an encoder model of a specific transformer autoencoder model of the plurality of transformer autoencoder models.

To train an encoder model of the specific transformer autoencoder model of the plurality of transformer autoencoder models, the processing unit 202 executes the second set of steps. In the first step of the second set of steps, the processing unit is configured to receive a plurality of input data items. The plurality of input data items comprises a plurality of portions of a knowledge graph associated with at least one of the at least one compliance requirement or at least one engineering project.

In a second step of the second set of steps, the processing unit is configured to apply the encoder model on the plurality of input data items. The encoder model is configured to encode the plurality of input data items to generate a plurality of encoded data items. The plurality of encoded data items is at least one of a graph embedding, a word embedding, state embeddings, or sequence-to-sequence embedding.

In a third step of the second set of steps, the processing unit is configured to apply the decoder model on the plurality of encoded data items to generate a plurality of reconstructed data items. The decoder model is configured to reconstruct the plurality of input data items from the plurality of encoded data items. However, the decoder model is unable to generate a faithful reconstruction of the plurality of input data items as there is a possibility of reconstruction loss. Thus, the generated plurality of reconstructed data items is different from the plurality of input data items.

In a fourth step of the second set of steps, the processing unit 202 is configured to compare the plurality of input data items with the plurality of reconstructed data items. In one example, the plurality of input data items is compared with the plurality of reconstructed data items by application of a of a comparison algorithm such as cosine similarity algorithms, Levenshtein distance, Jaccard similarity, or Sounde algorithms on the plurality of reconstructed data items and the plurality of input data items. The processing unit 202 is further configured to determine a reconstruction loss parameter based on the comparison. In one example, the reconstruction loss parameter is indicative of a plurality of differences between the plurality of input data items and the plurality of reconstructed data items. In other words, the reconstruction loss parameter is indicative of a reconstruction loss associated with the transformer autoencoder model.

In a fifth step of the second set of steps, the processing unit 202 is configured to apply an optimizing algorithm on the encoder model to optimize the first set of neural weights of the first set of neurons of the encoder model. In one example, the optimization algorithm is a Stochastic Gradient Descent optimizer algorithm which is configured to optimize the first set of weights with an optimization goal of minimizing the reconstruction loss parameter of the transformer autoencoder model. In other words, the processing unit 202 is configured to optimize the first set of neural weights of the encoder model by application of the optimization algorithm on the first set of neural weights based on the determined reconstruction loss parameter. Thus the processing unit 202 is configured to iterate the second set of steps until the first set of weights are optimized such that the reconstruction loss parameter is minimized. Thus, the processing unit 202 is configured to train the encoder model of each transformer autoencoder model by iterative execution of the second set of steps.

Similarly, a decoder model of each transformer autoencoder model is trained by the processing unit by iteratively executing a third set of steps. To train a decoder model of a specific transformer autoencoder model of the plurality of transformer autoencoder models, the processing unit executes the first step of the third set of steps. In the first step of the third set of steps, the processing unit 202 is configured to receive an input data item. The input data item is a portion of a knowledge graph associated with at least one of the at least one compliance requirement or at least one engineering project.

In the first step of the third set of steps, the processing unit 202 is further configured to receive an expected data item from a user or from a database. The expected data item comprises a set of knowledge morphs associated with at least one of the at least one compliance requirement or the at least one engineering project. In other words, the transformer autoencoder model is ideally expected to convert the input data item to the expected data item. In one example, the user generates the expected data item manually and the processing unit 202 receives the expected data item from the user. In one example, the transformer autoencoder model is configured to generate the first set of knowledge morphs based on the at least one compliance requirement or the at least one engineering project.

In one example, the processing unit is configured to receive from the user, a plurality of sets of training data, in which each set of training data is associated with a specific transformation objective of a plurality of transformation objectives. The plurality of sets of training data comprises an input dataset comprising a plurality of compliance requirements and a plurality of engineering objects. The plurality of training dataset further comprises an output dataset comprising a plurality of knowledge morphs.

The processing unit 202 is further to iteratively execute the second set of steps and the third set of steps on each transformer autoencoder model of the plurality of transformer autoencoder models based on the received plurality of sets of training data. For example, one or more sets of the plurality of sets of training data is configured to train one or more transformer autoencoder models to transform knowledge graphs of one or more compliance requirements into a set of knowledge morphs. Similarly, one or more sets of the plurality of sets of training data is configured to train one or more transformer autoencoder models to transform knowledge graphs of one or more sengineering projects into a set of knowledge morphs.

The automation module further causes the automation module 112 to generate the first engineering project by implementation of an engineering project generation procedure on the first set and the second set of knowledge morphs. Advantageously, the first engineering project is compliant with the at least one compliance requirement.

The processing unit is configured to implement a fourth set of steps to generate the first engineering project from the first set of knowledge morphs and the second set of knowledge morphs. In a first set of the fourth set of steps, the processing unit 202 is configured to receive a plurality of knowledge templates from a database server. Each knowledge template of the plurality of knowledge templates comprises a portion of an engineering project which complies with a specific compliance requirement of a plurality of compliance requirement. For example, a knowledge template comprises information associated with an engineering program which complies with a set of compliance requirements of the plurality of compliance requirements. For example, the set of compliance requirements is a list of compliance requirements which is indicative of a specific industrial domain in which the engineering project is implemented, a list of industrial devices connected within the engineering project, a specified cost of implementation of the engineering project, and a predefined efficiency level of execution of the engineering program. In such a case, the first knowledge template comprises an engineering program which executes with the predefined efficiency level to control the list of industrial devices connected within the engineering project. Furthermore, the engineering program can be run in a Programmable logical controller whose costs are aligned with the specified cost of implementation of the engineering project. Furthermore, the engineering program is coded such as to efficiently achieve one or more objectives in the specific industrial domain.

Each knowledge template is linked to a specific set of compliance requirements of the set of compliance requirements. The plurality of knowledge templates are generated by manual coders or may be extracted from a plurality of engineering projects by the engineering system.

The automation module 112 further causes the processing unit to compare the first set of knowledge morphs and the second set of knowledge morphs with each knowledge template of the plurality of knowledge templates. In one example, the processing unit 202 is configured to compare the first set of knowledge morphs with each knowledge template of the plurality of knowledge templates to determine a first set of knowledge templates which match with the at least one compliance requirement associated with the first set of knowledge morphs. The processing unit 202 is further configured to compare the second set of knowledge morphs with each knowledge template of the first set of knowledge morphs. The processing unit is further configured to determine a second set of knowledge templates from the first set of knowledge templates. The determined second set of knowledge templates comprise information about a set of industrial devices which are represented in the second set of knowledge morphs. In other words, the processing unit is configured to identify those knowledge templates which comprises information about a list of devices in the second engineering project.

The processing unit 202 is further configured to concatenate the determined set of knowledge templates by implementation of a concatenation procedure on the determined set of knowledge templates. The processing unit is further configured to generate the first engineering project based on the concatenated set of knowledge templates. The processing unit 202 is further configured to determine a difference parameters based on a plurality of differences between the first set of knowledge morphs and the second set of knowledge morphs. The processing unit 202 is further configured to determine the difference parameter to a user. The difference parameter is indicative of a degree of non-compliance of the second engineering project with the at least one compliance requirement. The processing unit 202 is further configured to display the generated first engineering project to a user.

The storage unit 206 may be a non-transitory storage medium configured for storing a database (such as database 118) which comprises server version of the plurality of programming blocks associated with the set of industrial domains.

The communication interface 208 is configured for establishing communication sessions between the one or more client devices 120A-N and the engineering system 102. The communication interface 208 allows the one or more engineering applications running on the client devices 120A-N to import/export one or more engineering projects into the engineering system 102.

In an embodiment, the communication interface 208 interacts with the interface at the one or more client devices 120A-N for allowing a plurality of engineers to access the engineering program associated with the engineering project and perform one or more actions on the set of engineering project artifacts 108A-N.

The input-output unit 210 may include input devices a keypad, touch-sensitive display, camera (such as a camera receiving gesture-based inputs), etc. capable of receiving one or more input signals, such as user commands to process the generated engineering project. Also, the input-output unit 210 may be a display unit for displaying a graphical user interface which visualizes the set of automation templates to the user. The bus 214 acts as interconnect between the processing unit 202, the memory 204, and the input-output unit 210.

The network interface 212 is configured to handle network connectivity, bandwidth and network traffic between the engineering system 102, the client devices 120A-N and the industrial plant 106.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of an engineering system 102 as is unique to the present disclosure or necessary for an understanding of the present disclosure is depicted and described. The remainder of the construction and operation of the engineering system 102 may conform to any of the various current implementation and practices known in the art.

FIG 3 is a block diagram of an automation module 112, such as those shown in FIG 2, in which an embodiment of the present invention can be implemented. In FIG 3, the automation module 112 comprises a request handler module 302, an object behavior model generation module 304, an analysis module 306, a natural language processing module 308, an engineering object database 310, a validation module 312 and a deployment module 314. FIG. 3 is explained in conjunction with FIG. 1 and FIG. 2.

The request handler module 302 is configured for receiving the request to generate the engineering project for the industrial plant 106. For example, the request is received from one of the one or more users external to the industrial environment 100 via the network 104. In alternative embodiment, the request is received from the one or the one or more client devices 120A-N via the network 104.

The object behavior model generation module 304 is configured for generating the central knowledge morph from the plurality of engineering projects.

The analysis module 306 is configured for analyzing the central knowledge morph and also to generate the plurality of knowledge templates. Further, the analysis module 306 is configured for applying the natural language processing algorithm on the plurality of engineering projects.

The natural language processing module 308 is configured for extracting the plurality of data items from the plurality of engineering projects.

The engineering object database 310 is configured for generating an engineering object library comprising the generated plurality of knowledge templates, information about the set of engineering project artifacts 108A-N, information about physical connections between the set of engineering project artifacts 108A-N, and a plurality of variants associated with the set of engineering project artifacts 108A-N and the physical connections.

The validation module 312 is configured to generate a simulation instance for the generated first engineering project. The validation module 312 is configured to simulate execution of the generated first engineering project in a simulation environment based on the generated simulation instance.

The deployment module 314 is configured for deploying the generated first engineering project in the industrial plant.

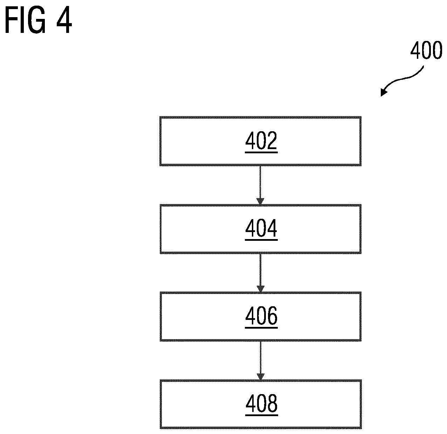

FIG 4 is a process flowchart illustrating an exemplary method of automatically generating an engineering project based at least one compliance requirement, according to an embodiment of the present invention. FIG 4 is described in conjunction with FIG 1, 2, and 3.

At step 402, the automation module 112 causes the processing unit 202 to receive at least one compliance requirement for a first engineering project. The at least one compliance requirement is a textual description of one or more key performance indicators associated with the first engineering project.

At step 404, the automation module 112 causes the processing unit 202 to generate a first set of knowledge morphs and a second set of knowledge morphs by implementation of a knowledge morph generation procedure on the at least one compliance requirement and on a second engineering project.

At step 406, the automation module 112 causes the processing unit 202 to generate the first engineering project by implementation of an engineering project generation procedure on the first set and the second set of knowledge morphs. The first engineering project is compliant with the at least one compliance requirement.

At step 408, the automation module 112 causes the processing unit 202 to display the generated first engineering project to a user.

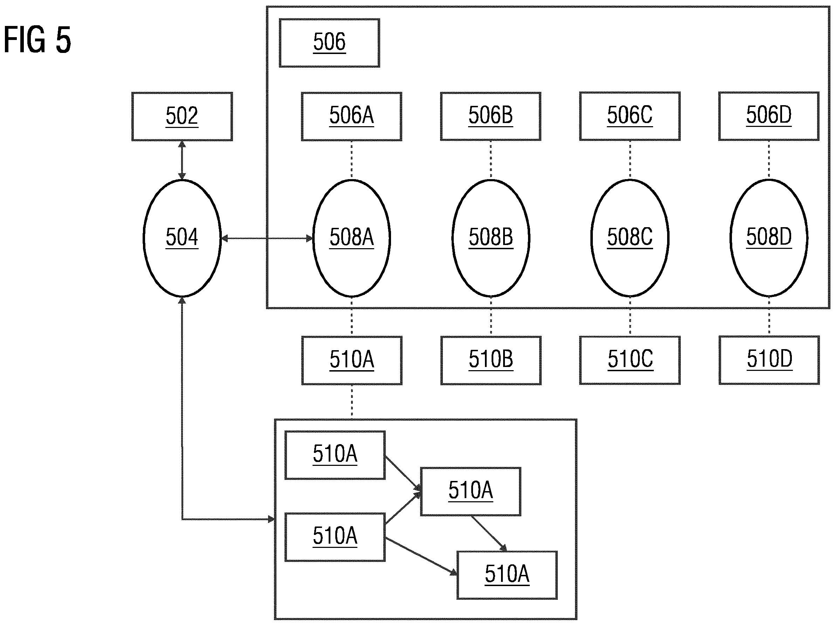

FIG 5 is a schematic representation of a process of automatic generation of an engineering project by use of knowledge morphs, according to an embodiment of the present invention. FIG 5 is described in conjunction with FIG 1, 2, 3 and 4.

FIG. 5 illustrates at least one compliance requirement 502 which is used by the processing unit 202, along with a central knowledge morph 504. The at least one compliance requirement is a textual description of a plurality of key performance indicators 506A-D. The automation module 112 is configured to generate a set of knowledge morphs 508A-D based on the plurality of key performance indicators 506A-D. Each of the set of knowledge morphs 508A-D is used to generate a plurality of engineering projects 510A-D. Each engineering project comprises a set of engineering project artifacts 512A-D.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### REFERENCE SIGN LIST

1. an industrial environment 100
2. an engineering system 102
3. one or more client devices 120A-N
4. a network 104
5. plurality of hardware equipment 108A-N
6. a platform 110
7. an automation module 112
8. a server 114
9. a network interface 116
10. a database 118
11. a processor(s) 202
12. an accessible memory 204
13. a storage unit 206
14. a communication interface 208
15. an input-output unit 210
16. a network interface 212
17. a bus 214
18. an integrated development environment (IDE) 216
19. a request handler module 302,
20. an ontology generation module 304,
21. an analysis module 306,
22. a modifier module 308
23. engineering project database 310
24. a validation module 312
25. a deployment module 314.

## Claims

1. A computer implemented method of generating an engineering project based on a specific compliance requirement, the method comprising:
receiving, by the processing unit (202), at least one compliance requirement for a first engineering project, wherein the at least one compliance requirement is a textual description of one or more key performance indicators associated with the first engineering project;
generating a first set of knowledge morphs and a second set of knowledge morphs by implementation of a knowledge morph generation procedure on the at least one compliance requirement and on a second engineering project respectively, wherein each knowledge morph of the first set and the second set of knowledge morphs are ontological representations of relationship between between one or more compliance requirements of the industrial plant, and at least one of the first engineering project and the second engineering projects;
generating, by the processing unit (202), the first engineering project by implementation of an engineering project generation procedure on the first set and the second set of knowledge morphs, wherein the first engineering project is compliant with the at least one compliance requirement; and
displaying, by the processing unit (202), the generated first engineering project to a user.

2. The method according to claim 1, wherein the implementation of the knowledge morph generation procedure on the at least one compliance requirement and on the second engineering project comprises:
generating, by the processing unit (202), a first knowledge graph and a second knowledge graph based on the at least one compliance requirement and the second engineering project respectively;
applying, by the processing unit, a transformer autoencoder model, on each of the first knowledge graph and the second knowledge graph, wherein the transformer autoencoder model is configured to generate the first set of knowledge morphs and the second set of knowledge morphs from the first knowledge graph and the second knowledge graph respectively; and
generating, by the processing unit, the first set of knowledge morphs and the second set of knowledge morphs based on the application of the transformer autoencoder model, on the generated first knowledge graph and the second knowledge graph.

3. The method according to claim 2, wherein applying the transformer autoencoder model on the generated knowledge graph comprises:
generating, by the processing unit (202), a first flattened knowledge graph and a second flattened knowledge graph by application of a flattening algorithm on the first and the second knowledge graphs; and
applying, by the processing unit (202), the transformer autoencoder model on the flattened first knowledge graph and the second knowledge graph to generate the first set of knowledge morphs and the second set of knowledge morphs respectively.

4. The method according to any of claims 1, 2, or 3, wherein
the transformer autoencoder model comprises an encoder model and a decoder model,
the encoder model is a neural network with a first set of neurons and a first set of neural weights, and
the decoder model is a neural network with a second set of neurons and a second set of neural weights.

5. The method according to claim 4, wherein the encoder model of the transformer autoencoder model is trained by:
receiving, by the processing unit (202), a plurality of input data items;
applying, by the processing unit (202), the encoder model on the plurality of input data items to generate a plurality of encoded data items;
applying, by the processing unit (202), the decoder model on the plurality of encoded data items to generate a plurality of reconstructed data items;
comparing, by the processing unit (202), the plurality of reconstructed data items with the plurality of input data items to determine a reconstruction loss;
optimizing, by the processing unit (202), the first set of neural weights of the encoder model by application of an optimization algorithm on the first set of neural weights based on the determined reconstruction loss.

6. The method according to claim 5, wherein the decoder model of the transformer autoencoder model of the plurality of transformer autoencoder models is trained by:
receiving, by the processing unit (202), an input data item and an expected output data item;
applying, by the processing unit (202), the encoder model on the input data item to an encoded data item;
applying, by the processing unit (202), the decoder model on the encoded data item to generate a transformed data item;
comparing, by the processing unit (202), the transformed data item with the expected output data item to determine an optimization difference;
optimizing, by the processing unit (202), the second set of neural weights of the decoder model by application of an optimization algorithm on the second set of neural weights based on the optimization difference.

7. The method according to claims 1 to 6, wherein each knowledge morph, of the first set of knowledge morphs and the second set of knowledge morphs, comprises a compilation of variant versions of the first engineering project, with each variant configured to meet a specific set of key performance indicators.

8. The method according to claim 1 and 7, wherein implementing the engineering project generation procedure comprises:
comparing, by the processing unit (202), the first set of knowledge morphs and the second set of knowledge morphs with each knowledge template of a plurality of knowledge templates;
determining, by the processing unit (202), a set of knowledge templates from the plurality of knowledge templates based on the comparison; and
generating, by the processing unit (202), the first engineering project based on the determined set of knowledge templates.

9. The method according to any of claims 1 to 8, wherein implementing the engineering project generation procedure further comprises:
concatenating, by the processing unit (202), the determined set of knowledge templates by implementation of a concatenation procedure on the determined set of knowledge templates; and
generating, by the processing unit (202), the first engineering project based on the concatenated set of knowledge templates.

10. The method according to any of claims 1 to 9, further comprising:
determining, by the processing unit (202), a difference parameter between the first set of knowledge morphs and the second set of knowledge morphs based on a comparison of the first set of knowledge morphs and the second set of knowledge morphs; and
displaying, by the processing unit (202), the difference parameter to a user, wherein the difference parameter is indicative of a degree of non-compliance of the second engineering project with the at least one compliance requirement.

11. An engineering system for computer implemented automatic generation of an engineering program which is compliant with one or more compliance requirements, wherein the engineering system comprises:
one or more processor(s) (202); and
a memory (204) coupled to the one or more processor(s), wherein the memory comprises an automation module (112) stored in the form of machine-readable instructions executable by the one or more processor(s), wherein the automation module (112) when executed causes the one or more processor (s) to perform a method according to any of the claims 1-10.

12. An industrial environment (100) comprising:
an engineering system (102) as claimed in claim 11;
a industrial plant comprising one or more physical components; and
one or more client devices (120A-N) communicatively coupled to the engineering system (102) via a network (104), wherein the engineering system (102) is configured to perform a method according to any of the claims 1 to 10.

13. A computer-program product, having machine-readable instructions stored therein, that when executed by a processing unit (202), cause the processors to perform a method according to any of the claims 1-10.
